# EUROPÄISCHE PATENTSCHRIFT

(11) **EP 1 042 538 B1**
(45) Veröffentlichungstag und Bekanntmachung des Hinweises auf die Patenterteilung: **11.07.2001**
(21) Anmeldenummer: 98966802.5
(22) Anmeldetag: 17.12.1998
(51) Int. Cl.: C25D 1/00

(54) **WÄSSRIGES BAD UND VERFAHREN ZUM ELEKTROLYTISCHEN ABSCHEIDEN VON KUPFERSCHICHTEN**
AQUEOUS BATH AND METHOD FOR ELECTROLYTIC DEPOSITION OF COPPER COATINGS
BAIN AQUEUX ET PROCEDE POUR DEPOSER DES COUCHES DE CUIVRE PAR VOIE ELECTROLYTIQUE

(30) Priorität: 17.12.1997 DE 19758121
(43) Veröffentlichungstag der Anmeldung: 11.10.2000
(73) Patentinhaber: ATOTECH Deutschland GmbH, 10553 Berlin (DE)
(72) Erfinder: DAHMS, Wolfgang, D-13437 Berlin (DE); JONAT, Michael, D-13587 Berlin (DE); SENGE, Gerd, D-13409 Berlin (DE); NITSCHE, Detlev, D-13403 Berlin (DE)
(74) Vertreter: Effert, Bressel und Kollegen
(86) Internationale Anmeldenummer: DE9803783
(87) Internationale Veröffentlichungsnummer: WO9931300

(56) Entgegenhaltungen:
- DE-A- 3 135 830
- DE-A- 19 643 091

## Beschreibung

Die Erfindung betrifft ein wäßriges Bad und ein Verfahren zum elektrolytischen Abscheiden von Kupferschichten. Das Bad kann sowohl zur Verstärkung von Leiterbahnen auf gedruckten Schaltungen als auch zur Erzeugung dekorativer Überzüge, beispielsweise auf Sanitärarmatur- und Automobilteilen, eingesetzt werden.

Es ist seit langem bekannt, sauren, insbesondere schwefelsauren elektrolytischen Kupferbädern organische Zusatzstoffe zuzugeben. Damit können die dekorativen und funktionellen Eigenschaften der Kupferüberzüge gesteuert werden. Vor allem werden den Bädern Glanzbildner zugegeben, um glänzende Schichten zu erhalten. Zahlreiche zu diesem Zweck verwendete Verbindungen und Mischungen von Verbindungen, beispielsweise Thioharnstoff, Gelatine, Melasse, Kaffee-Extrakt, "basische" Farbstoffe und Thiophosphorsäureester, besitzen jedoch keine praktische Bedeutung mehr, da die Qualität der mit diesen Verbindungen erhaltenen Kupferüberzüge nicht den heutigen Anforderungen entsprechen. Beispielsweise werden mit diesen Zusatzstoffen keine gleichmäßig glänzenden Schichten und keine Schichten mit ausreichend hoher Bruchelongation erhalten.

Die besten derzeit bekannten Verkupferungsbäder enthalten als Zusatzstoffe meist eine Mischung von Polyethern und organischen, insbesondere aromatischen Thioverbindungen. Eine derartige Mischung ist aus DE-OS 15 21 062 bekannt. Das Verkupferungsbad kann danach außerdem Phenazinfarbstoffe enthalten.

Ferner wurde in DE-AS 12 46 347 auch der Einsatz von Polyalkyleniminen zusammen mit organischen Thioverbindungen zur elektrolytischen Verkupferung vorgeschlagen.

Die genannten Bäder führen jedoch nicht zu Kupferschichten mit befriedigenden Eigenschaften: Die Schichten sind auf den häufig komplex geformten Werkstücken nicht gleichmäßig dick. Außerdem ebnen diese Bäder Unregelmäßigkeiten an der Oberfläche der zu beschichtenden Substrate auch ungleichmäßig stark ein. Daher haben aus diesen Bädern abgeschiedene Kupferschichten kein gleichmäßiges Aussehen. Auch die funktionellen Eigenschaften sind nicht ohne weiteres steuerbar.

Zur Verbesserung der Abscheidebäder wird in DE-OS 20 39 831 ein schwefelsaures Kupferbad beschrieben, das neben einer polymeren Sauerstoff enthaltenden Verbindung und einer Thioverbindung mit funktionellen Gruppen zur Erhöhung der Wasserlöslichkeit noch mindestens einen Farbstoff aus der Gruppe der polymeren Phenazoniumverbindungen enthält. Diese Bäder können ferner nicht-ionische Netzmittel und organische Schwefelverbindungen enthalten.

In EP 0 071 512 A1 ist ein Verkupferungsbad beschrieben, das neben dem Kaliumsalz von N,N-Diethyldithiocarbamat-S-ω-propylsulfonat und Polyethylenglykol den Farbstoff Kristallviolett enthält.

In DE 34 20 999 A1 ist ein Bad mit organischen Thioverbindungen und Polyetherverbindungen zusammen mit Phthalocyanin-Derivaten und Apo-Safraninverbindungen beschrieben.

Es hat sich allerdings gezeigt, daß sich mit diesen Bädern insbesondere im oberen Stromdichtebereich eine hohe Einebnung des Kupferüberzuges einstellt, während die Einebnung im niedrigen Stromdichtebereich relativ gering ist. Dies führt bei der Anwendung dieses Bades zur Herstellung von Leiterplatten zum sogenannten Phänomen der Lochrandabflachung, bei dem in der unmittelbaren Nähe von Bohrungen in den Leiterplatten eine Verringerung der Kupferschichtdicke beobachtet wird, so daß sich Bruchstellen im Kupferüberzug an den Locheingängen beim Löten ausbilden. Bei der dekorativen Kupferabscheidung führt dieser Nachteil zu ungleichmäßigem Aussehen der Schicht an unterschiedlichen Stellen des Werkstückes, so daß das Bad nur bedingt für diese Anwendung eingesetzt werden kann.

Anstelle der Farbstoffe sind auch Umsetzungsprodukte von Polyalkanolaminen mit einem Alkyfierungs- oder Quarternisierungsagens, beispielsweise Benzylchlorid, (US-A-4,110,176) und von Polyalkyleniminen mit Epichlorhydrin und einem Alkylierungsmittel (EP 0 068 807 A2) als Zusatzstoffe in Kupferbädern vorgeschlagen worden. Ferner sind in EP 0 107 109 A2 auch Umsetzungsprodukte von Thioverbindungen mit Acrylamid beschrieben.

In US-A-664.278 ist ein Verkupferungsbad offenbart, das neben den üblichen Badbestandteilen Umsetzungsprodukte von Epichlorhydrin mit Stickstoff enthaltenden Aromatenverbindungen enthält.

Durch Zugabe dieser Verbindungen kann die Einebnung des Kupferüberzuges nachhaltig verbessert werden. Jedoch wird die Metallstreuung verschlechtert, das ist die Gleichmäßigkeit der Schichtdicke an unterschiedlichen Stellen eines Werkstückes, an denen sich auch unterschiedliche Stromdichten einstellen. Dadurch können nur ungleichmäßig aussehende Schichten erhalten werden. Es hat sich herausgestellt, daß dieser Nachteil insbesondere dann in Erscheinung tritt, wenn Stickstoff enthaltende Thioverbindungen als Zusatzstoffe verwendet werden. Außerdem wirken diese Verbindungen nur innerhalb eines schmalen Konzentrationsbereiches in der gewünschten Weise, so daß beim praktischen Betrieb eines Bades mit diesen Verbindungen der optimale Konzentrationsbereich häufig nicht eingehalten werden kann. Beispielsweise können beim Erhöhen der Konzentration um einige Milligramm pro Liter über die obere Konzentrationsgrenze hinaus bereits Lochwandabflachungen an Leiterplatten entstehen, so daß die gedruckten Schaltungen beim späteren Löten Risse bekommen und unbrauchbar werden.

In DE 27 46 938 A1 ist ein Bad beschrieben, daß als Zusatzstoffe unter anderem Säureamide zusammen mit einer Sauerstoff enthaltenden, hochmolekularen Verbindung und einer organischen Thioverbindung mit funktionellen Gruppen zur Erhöhung der Wasserlöslichkeit enthält. Mit diesem Bad konnte nur eine Verbesserung der Glanzstreuung erreicht werden, nicht aber eine Verbesserung der Metallstreuung.

Die üblicherweise eingesetzten Sauerstoff enthaltenden, hochmolekularen Verbindungen als Zusatzstoffe in elektrolytischen Kupferbädern weisen nur eine geringe Stabilität auf. Sie zersetzen sich bei der Anwendung an den Elektroden zu im Bad unlöslichen Polymeren, die sich im Bad anreichern. Diese unerwünschten Reaktionsprodukte rahmen an den Behälterwänden als gallertartige Masse aus und lagern sich sogar auf den Behandlungsgutoberflächen selbst ab, so daß sich auf dem Behandlungsgut Fehlstellen bilden und dieses daher unbrauchbar wird. Insbesondere bei erhöhten Badtemperaturen wird die Zersetzung beschleunigt, so daß bei Temperaturen oberhalb von 28°C eine sehr schnelle Zersetzung beobachtet wird.

Es hat sich auch gezeigt, daß die genannten Zusätze häufig zu einer Verschlechterung der mechanischen Eigenschaften, insbesondere der Härte und der Bruchelongation der Kupferüberzüge führen, verglichen mit Abscheideverfahren, bei denen diese Zusätze nicht eingesetzt werden. Ebenso weisen die mit diesen Stoffen abgeschiedenen Schichten Passivitätserscheinungen auf, die eine nachfolgende Aktivierung für die galvanotechnische Weiterbehandlung erfordert. Außerdem verschlechtern viele derartige Stoffe, die als Inhibitoren für die Kupferabscheidung wirken, die Metallstreuung, so daß wegen stellenweise geringer Metallschichtdicke Risse in Bohrungen und Lochrändern an Leiterplatten auftreten, insbesondere wenn die Kupferschicht durch Lötprozesse thermisch belastet wird.

Aus US-A-3,502,551 ist außerdem ein wäßriges saures Kupferbad bekannt, das mindestens ein Kupfersalz, mindestens eine anorganische Säure und gegebenenfalls ein Chlorid sowie als Zusätze eine mehrere Aminogruppen aufweisende aliphatische Kohlenwasserstoffverbindung, eine Sauerstoff enthaltende, hochmolekulare organische Verbindung und zur Erhöhung der Wasserlöslichkeit eine organische Thioverbindung mit funktionellen Gruppen enthält. Durch die Kombination dieser Zusatzstoffe soll die Glanzbildung und Einebnung der abgeschiedenen Kupferschicht verbessert werden.

Ferner ist aus DE 27 06 521 A1 ein Kupferelektrolyt bekannt, der Umsetzungsprodukte von Epihalogenhydrinen mit substituierten Pyridinen, organische Thioverbindungen und Netzmittel als Badzusätze enthält. Mit diesem Bad konnte eine Verbesserung der Glanzstreuung, nicht jedoch der Metallverteilung erreicht werden.

Die beiden letztgenannten Badtypen haben den Nachteil einer schlechten Metallstreuung. Eine gleichmäßige Metallverteilung ist jedoch besonders bei der Metallisierung von gedruckten Schaltungen erforderlich, die viele kleine Bohrlöcher aufweisen. Wird in diesen Bohrungen eine Schicht mit zu geringer Dicke abgeschieden, so reißt diese bei thermischer Belastung, beispielsweise beim Löten, so daß der Stromdurchgang unterbrochen wird. Derartig beschädigte Leiterplatten sind unbrauchbar. Da Leiterplatten mit immer geringeren Bohrlochdurchmessern, beispielsweise 0,25 mm, hergestellt werden, sind die Anforderungen an die Metallstreuung in diesen Bohrungen sehr hoch. Es ist beobachtet worden, daß die Kupferschichtdicke insbesondere in Bohrungen mit kleinem Durchmesser unbefriedigend ist. Zur Quantifizierung wird hierzu das Maß der Metallstreuung herangezogen. Dieses wird als Verhältnis der Kupferschichtdicke in der Mitte der Bohrung zur Kupferschichtdicke auf der Außenseite der Leiterplatte angegeben. Mit den bekannten Bädern können in Bohrungen mit einem geringen Durchmesser, beispielsweise von 0,3 mm, nur Metallstreuungswerte von 30 bis 40 % erreicht werden, während für die Streuung in großen Bohrungen, beispielsweise mit einem Durchmesser von 1 mm, Werte von 100 % ermittelt werden.

Der vorliegenden Erfindung liegt von daher das Problem zugrunde, die Nachteile der bekannten Verfahren und Abscheidebäder zu vermeiden und insbesondere ein Verkupferungsbad bereitzustellen, mit dem Kupferschichten mit hervorragenden mechanischen Eigenschaften, wie guter Bruchelongation, sowie sehr gleichmäßiger Schichtdicke auch in Bohrungen mit kleinem Durchmesser herstellbar sind, wobei diese Eigenschaften auch bei stärkeren Schwankungen der Badzusammensetzung erreichbar sein sollen, da die Zusammensetzung im praktischen Betrieb häufig nicht konstant eingestellt werden kann. Das Bad soll insbesondere zur Anwendung in der Leiterplattentechnik einsetzbar sein. Daher sollen sich auch bei thermischer Belastung keine Risse in der abgeschiedenen Schicht ausbilden können.

Gelöst wird dieses Problem durch ein wäßriges Bad nach Anspruch 1 und ein Abscheideverfahren nach Anspruch 17. Bevorzugte Ausführungsformen der Erfindung sind in den Unteransprüchen angegeben.

Das erfindungsgemäße Bad enthält neben den üblicherweise eingesetzten Bestandteilen, mindestens einer Kupferionenquelle und mindestens einer die elektrische Leitfähigkeit des Bades erhöhenden Verbindung, beispielsweise einer Säure, zusätzlich mindestens einen Zusatzstoff, der als Umsetzungsprodukt aus Verbindungen, ausgewählt aus der Gruppe, bestehend aus Epihalogenhydrinen, Dihalogenhydrinen und 1-Halogen-2,3-propandiolen, und Polyamidoaminen gebildet ist.

Mit diesem Bad können Kupferüberzüge mit sehr gleichmäßiger Schichtdicke auch in sehr engen Bohrungen hergestellt werden. Ferner weisen die aus diesem Bad abgeschiedenen Kupferschichten eine hervorragende Bruchelongation auf und bei Verwendung weiterer Glanzbildner als Badzusätze auch einen sehr gleichmäßigen Glanz auf der gesamten Werkstückoberfläche. Die Gleichmäßigkeit der Kupferschicht wird durch die Zugabe des Epihalogenhydrin- oder Dihalogenhydrin- oder 1-Halogen-2,3-propandiol/Polyamidoamin-Zusatzstoffes zum Bad ermöglicht. Die optischen und mechanischen Eigenschaften sowie die Schichtdicke sind weitgehend unabhängig von der lokalen Stromdichte und hängen außerdem nur wenig von der Konzentration des Zusatzstoffes im Abscheidebad ab. Wegen dieser guten Eigenschaften sind Bäder mit den erfindungsgemäßen Zusatzstoffen für die Herstellung von Leiterplatten sehr gut geeignet.

Eine Verwendung der bekannten Sauerstoff enthaltenden Verbindungen ist nicht erforderlich. Es hat sich herausgestellt, daß die Metallstreuung bei zusätzlicher Zugabe dieser Verbindungen sogar verringert wird. Durch weitere Badadditive, beispielsweise organische Thioverbindungen, Stickstoff enthaltende Thioverbindungen und/oder polymere Phenazoniumverbindungen, können die positiven Wirkungen der Zusatzstoffe aber noch gesteigert werden.

Die erfindungsgemäßen Zusatzstoffe können in an sich bekannter Weise hergestellt werden: In DE 31 35 830 A1 ist ein Herstellungsverfahren angegeben.

Danach werden diese Substanzen in einer zweistufigen Reaktion hergestellt. In der ersten Reaktionsstufe werden pro Mol von Dicarbonsäuren, die vorzugsweise 4 bis 10 Kohlenstoffatome enthalten, 1 bis 2 Mol eines Polyalkylenpolyamins kondensiert, das vorzugsweise 3 bis 10 basische Stickstoffatome (Aminogruppen) enthält. Bei dieser Kondensationsreaktion werden Polyamidoamine erhalten. Die Reaktionsbedingungen für die Kondensationsreaktion sind in der genannten Druckschrift näher angegeben. Danach wird die Reaktion vorzugsweise ohne Verwendung eines Lösungsmittels in Substanz durchgeführt. Nach einem anderen Herstellungsweg kann auch ein inertes Lösungsmittel verwendet werden. Zur Durchführung der Reaktion wird eine Reaktionstemperatur von 80°C bis 200°C eingestellt. Das bei der Kondensationsreaktion entstehende Wasser wird durch Destillation fortwährend aus dem Reaktionsgemisch entfernt.

Geeignete Dicarbonsäuren sind insbesondere Bernsteinsäure, Maleinsäure, Fumarsäure, Adipinsäure, Glutarsäure, Korksäure, Sebacinsäure, Phthalsäure und Terephthalsäure. Für die Herstellung der Polyamidoamine ist es auch möglich, Mischungen verschiedener Dicarbonsäuren einzusetzen, beispielsweise Mischungen von Adipinsäure mit Glutarsäure oder Maleinsäure. Vorzugsweise wird Adipinsäure als Dicarbonsäure verwendet.

Die zur Kondensation verwendeten Polyalkylenpolyamine sind vorzugsweise Diethylentriamin, Triethylentetramin, Tetraethylenpentamin, Dipropylentriamin, Tripropylentetramin, Bis-(hexamethylen)-triamin, Hexamethylentriamin und Bis-(aminopropyl)-piperazin.

Ferner kann das Kondensationsreaktionsgemisch außerdem Diamine enthalten. Die Diamine sollen in einer Konzentration von höchstens 10 Gew.-%, bezogen auf die Menge der Polyalkylenpolyamine, eingesetzt werden. Beispielsweise können Ethylendiamin, 3-Methylaminopropylamin und Hexamethylendiamin eingesetzt werden.

Ferner kann die Kondensationsreaktion auch in Gegenwart von Lactonen und/oder Lactamen durchgeführt werden. Vorzugsweise werden hierzu Lactone und Lactame mit 5 bis 12 Kohlenstoffatomen eingesetzt. Sowohl die Diamine wie auch die Lactame bzw. Lactone werden bei der Kondensationsreaktion in das Polyamidoamin-Kondensat eingebaut.

Zur Herstellung der erfindungsgemäßen Zusatzstoffe werden in der zweiten Reaktionsstufe Epihalogenhydrine, Dihalogenhydrine und/oder 1-Halogen-2,3-propandiole und das in der ersten Stufe gebildete Polyamidoamin in wäßriger Lösung umgesetzt. Als Epihalogenhydrine werden vorzugsweise 1-Chlor-2,3-epoxypropanol und 1-Brom-2,3-epoxypropanol, als Dihalogenhydrine vorzugsweise 1,3-Dichlor-2-propanol und 1,3-Dibrom-2-propanol und als 1-Halogen-2,3-propandiole bevorzugt 1-Chlor-2,3-propandiol und 1-Brom-2,3-propandiol eingesetzt.

Die Epihalogenhydrine, Dihalogenhydrine bzw. 1-Halogen-2,3-propandiole werden mit den Polyamidoaminen vorzugsweise in einem Verhältnis von 0,2 bis 3 Mol der Epihalogenhydrine, Dihalogenhydrine bzw. 1-Halogen-2,3-propandiole zu 1 Mol Polyamidoaminen umgesetzt.

Der pH-Wert der Reaktionslösung bei der zweiten Reaktionsstufe wird vorzugsweise auf 4,5 bis 8,5, vorzugsweise auf 5 bis 7, eingestellt. Die Reaktion wird bei bis zu 100°C, vorzugsweise von 20°C bis 60°C, durchgeführt.

Zur Durchführung der Reaktion werden die Polyamidoamine in Wasser gelöst und die Lösung durch Zugabe von anorganischen oder organischen Säuren auf den genannten pH-Wert-Bereich eingestellt. Die Konzentration der Polyamidoamine kann in der Reaktionslösung in einem weiten Bereich schwanken. Sie beträgt vorzugsweise 20 bis 60 Gew.-%. Als organische Säuren zur Einstellung des pH-Wertes können insbesondere Ameisensäure, Essigsäure, Propionsäure und Oxalsäure verwendet werden. Als anorganische Säuren kommen vor allem Salzsäure, Schwefelsäure und Phosphorsäure in Betracht.

Die Umsetzung der Epihalogenhydrine, Dihalogenhydrine bzw. 1-Halogen-2,3-propandiole mit den Polyamidoaminen verläuft praktisch quantitativ. Sie ist beendet, sobald kein Epihalogenhydrin, Dihalogenhydrin bzw. 1-Halogen-2,3-propandiol und kein Polyamidoamin mehr vorhanden ist. Die Reaktionsdauer beträgt je nach der Art der eingesetzten Reaktionspartner etwa 5 Minuten bis etwa 3 Stunden.

Die relative Molmasse der Umsetzungsprodukte kann in einem Bereich von 150 bis 350.000 g/Mol, vorzugsweise von 300 bis 14.000 g/Mol, liegen. Dem Bad werden die erhaltenen Zusatzstoffe in einer Konzentration von 0,005 bis 50 g/l Bad, vorzugsweise von 0,02 bis 8,0 g/l, zugegeben. In Tabelle 1 sind Polyamidoamine aufgeführt, die mit Epihalogenhydrinen, Dihalogenhydrinen bzw. 1-Halogen-2,3-propandiolen umgesetzt werden können, wobei die erhaltenen Umsetzungsprodukte beim Einsatz in elektrolytischen Verkupferungsbädern hervorragende Eigenschaften der abgeschiedenen Kupferschichten, insbesondere eine ausgezeichnete Metallstreuung, ermöglichen. In der Tabelle sind außerdem bevorzugte Konzentrationen der nach Umsetzung mit Epichlorhydrin oder Dichlorhydrin erhaltenen Zusatzstoffe in den Kupferbädern angegeben.

Zusätzlich zu dem aus den Epihalogenhydrinen, Dihalogenhydrinen bzw. 1-Halogen-2,3-propandiolen und Polyamidoaminen erhaltenen Zusatzstoff kann in der Abscheidelösung mindestens eine Thioverbindung mit chemischen Resten zur Erhöhung der Wasserlöslichkeit enthalten sein, um glänzende Kupferschichten abzuscheiden. Durch die gleichzeitig enthaltenen erfindungsgemäßen Zusatzstoffe wird ein von der lokalen Stromdichte unabhängiger Glanz erzielt.

Ferner können zusätzlich auch Stickstoff enthaltende Thioverbindungen und/oder polymere Phenazoniumverbindungen enthalten sein.

Zur elektrolytischen Abscheidung von gleichmäßig dicken Kupferschichten auf einem Werkstück werden das Werkstück und eine als Anode dienende Elektrode mit dem Bad in Kontakt gebracht und die Elektrode und das Werkstück mit einer Spannungsquelle verbunden, so daß die Elektrode als Anode und das Werkstück als Kathode polarisiert werden.

Das Kupferbad enthält eine Kupferionenquelle, beispielsweise Kupfersulfat, und eine die elektrische Leitfähigkeit des Bades erhöhende Verbindung, beispielsweise Schwefelsäure, sowie üblicherweise ein Chlorid. Diese Grundzusammensetzung des Bades kann in weiten Grenzen schwanken. Im allgemeinen wird eine wäßrige Lösung folgender Zusammensetzung benutzt:

| | |
|---|---|
| Kupfersulfat (CuSO₄·5H₂O) | 20 bis 250 g/l |
| vorzugsweise | 60 bis 80 g/l oder |
| | 180 bis 220 g/l |
| Schwefelsäure | 50 bis 350 g/l |
| vorzugsweise | 180 bis 220 g/l oder |
| | 50 bis 90 g/l |
| Chloridionen | 0,01 bis 0,18 g/l |
| vorzugsweise | 0,03 bis 0,10 g/l |

Anstelle von Kupfersulfat können zumindest teilweise auch andere Kupfersalze benutzt werden. Auch die Schwefelsäure kann teilweise oder ganz durch Fluoroborsäure, Methansulfonsäure oder andere Säuren ersetzt werden. Die Chloridionen werden als Alkalichlorid (beispielsweise Natriumchlorid) oder in Form von Salzsäure p.A. zugesetzt. Die Zugabe von Natriumchlorid kann ganz oder teilweise entfallen, wenn in den Zusätzen bereits Halogenidionen enthalten sind.

Außerdem können im Bad übliche Glanzbildner, Einebner, Netzmittel oder weitere übliche Zusätze enthalten sein. Um glänzende Kupferniederschläge mit bestimmten Materialeigenschaften zu erhalten, werden zu dem Abscheidebad mindestens eine wasserlösliche Thioverbindung, vorzugsweise eine organische Thioverbindung, Stickstoff enthaltende Thioverbindungen und/oder polymere Phenazoniumverbindungen zugegeben.

Diese Einzelkomponenten sind innerhalb folgender Grenzkonzentrationen im anwendungsfertigen Bad enthalten:

| | |
|---|---|
| Wasserlösliche organische Thioverbindungen | 0,0005 bis 0,4 g/l |
| vorzugsweise | 0,001 bis 0,15 g/l. |

In Tabelle 2 sind beispielhaft organische Thioverbindungen aufgeführt, die in Kombination mit den erfindungsgemäßen Zusatzstoffen eingesetzt werden können. Zur Erhöhung der Wasserlöslichkeit sind entsprechende funktionelle Gruppen in den Verbindungen enthalten.

Stickstoff enthaltende Thioverbindungen (Thioharnstoffderivate) und/oder polymere Phenazoniumverbindungen können im Bad jeweils in folgenden Konzentrationen enthalten sein:

| | |
|---|---|
| | 0,0001 bis 0,50 g/l |
| vorzugsweise | 0,0005 bis 0,04 g/l. |

Typische Stickstoff enthaltende Thioverbindungen sind in Tabelle 3 und polymere Phenazoniumverbindungen in Tabelle 4 aufgeführt. Zur Herstellung des Bades werden die Zusatzstoffe und anderen Zusätze der Grundzusammensetzung hinzugefügt. Die Arbeitsbedingungen des Bades sind wie folgt:

| | |
|---|---|
| pH-Wert: | < 1, |
| Temperatur: | 15°C bis 50°C |
| vorzugsweise | 25°C bis 40°C |
| kathodische Stromdichte: | 0,5 bis 12 A/dm² |
| vorzugsweise | 3 bis 7 A/dm². |

Das Abscheidebad wird durch starke Anströmung und gegebenenfalls durch Einblasen von sauberer Luft derart bewegt, daß sich die Badoberfläche in starker Bewegung befindet. Dadurch wird der Stofftransport in der Nähe der Kathoden und Anoden maximiert, so daß größere Stromdichten ermöglicht werden. Auch eine Bewegung der Kathoden bewirkt eine Verbesserung des Stofftransportes an den jeweiligen Oberflächen. Durch die erhöhte Konvektion und Elektrodenbewegung wird eine konstante diffusionskontrollierte Abscheidung erzielt. Die Substrate können horizontal, vertikal und/oder durch Vibration bewegt werden. Eine Kombination mit der Lufteinblasung in das Abscheidebad ist besonders wirksam.

Das beim Abscheideprozeß verbrauchte Kupfer wird elektrochemisch über die Kupferanoden ergänzt. Für die Anoden wird Kupfer mit einem Gehalt von 0,02 bis 0,067 Gew.-% Phosphor verwendet. Sie können direkt in den Elektrolyten eingehängt werden oder in Form von Kugeln oder Stücken verwendet und hierzu in Titankörbe, die sich im Bad befinden, eingefüllt werden.

Die folgenden Beispiele und Vergleichsbeispiele dienen zur Erläuterung der Erfindung:

### Beispiel 1:

Einem Kupferbad mit der Zusammensetzung
200 g/l Kupfersulfat (CuSO₄·H₂O)
65 g/l Schwefelsäure
0,12 g/l Natriumchlorid
wurden als Badadditive
0,25 g/l Umsetzungsprodukt von Dichlorhydrin mit dem Polyamidoamin Nr. 3 aus Tabelle 1
0,05 g/l Bis-(ω-sulfopropyl)-disulfid, Dinatriumsalz und
0,005 g/l Poly(7-dimethylamino-5-phenyl-phenazoniumchlorid)
zugegeben. Bei einer Elektrolyttemperatur von 30°C wurde bei einer Stromdichte von 4 A/dm² und mit Bewegung des Bades durch Lufteinblasung ein gut eingeebneter, glänzender Kupferüberzug erhalten.

### Vergleichsbeispiel 1:

Einem Kupferbad mit der Zusammensetzung
80 g/l Kupfersulfat (CuSO₄·H₂O)
180 g/l Schwefelsäure
0,08 g/l Natriumchlorid
wurden als Badadditive
0,60 g/l Polypropylenglykol
0,02 g/l 3-Mercaptopropan-1-sulfonsäure, Natriumsalz und
0,003 g/l N-Acetylthioharnstoff
zugegeben. Bei einer Elektrolyttemperatur von 30°C wurde bei einer Stromdichte von 2 A/dm² ein glänzender Kupferüberzug und bei Abscheidung auf einer 3 mm dicken Leiterplatte mit Bohrungen mit 0,3 mm bzw. 0,5 mm Durchmesser eine Metallverteilung von 28 % (0,3 mm) bzw. 49 % (0,5 mm) erhalten.

Zur Bestimmung der Metallstreuung wurden Leiterplatten elektrolytisch beschichtet und anschließend so zersägt, daß ein Sägeschnitt genau durch die Mitte einer Bohrung parallel zu deren Achse gelegt wurde. Die so präparierte Probe wurde für die Anfertigung eines Querschliffes in Kunstharz eingebettet. Nach Fertigstellung des Querschliffes war die angeschnittene Kupferschicht an der Plattenober- und der Plattenunterseite sowie die Schicht in der Bohrung mit Hilfe eines Mikroskopes gut erkennbar. Ihre Dicke konnte daher exakt ermittelt werden.

### Beispiel 2:

Nach Ersatz des Polypropylenglykols aus Vergleichsbeispiel 1 durch 0,25 g/l des Umsetzungsproduktes von Dichlorhydrin mit dem Polyamidoamin Nr. 5 aus Tabelle 1 wurde eine deutlich bessere Metallverteilung in den Bohrungen mit 0,3 mm bzw. 0,5 mm Durchmesser erhalten. Die gemessenen Werte betrugen 45 % (0,3 mm) bzw. 67 % (0,5 mm). Die erforderliche Menge des eingesetzten Badadditivs war außerdem wesentlich geringer als im Vergleichsbeispiel, so daß eine billigere Verkupferung mit dem wirksameren Zusatzstoff ermöglicht wurde.

### Vergleichsbeispiel 2:

Einem Kupferbad mit der Zusammensetzung
80 g/l Kupfersulfat (CuSO₄·H₂O)
200 g/l Schwefelsäure
0,06 g/l Natriumchlorid
wurden als Badadditive
0,4 g/l Octyl-polyethylenglykolether
0,01 g/l Bis-(ω-sulfopropyl)-sulfid, Dinatriumsalz und
0,01 g/l Polyacrylsäureamid
zugegeben. Bei einer Elektrolyttemperatur von 30°C konnte bei einer Stromdichte von 2,5 A/dm² auf einer 1,6 mm dicken Leiterplatte mit Bohrungen mit 0,3 mm bzw. 0,5 mm Durchmesser eine Metallverteilung von 50 % (0,3 mm) bzw. 75 % (0,5 mm) erhalten werden. Der Kupferüberzug war gleichmäßig glänzend.

### Beispiel 3:

Der Ether (Octyl-polyethylenglykolether) und das Amid (Polyacrylsäureamid) aus Vergleichbeispiel 2 wurden durch das Umsetzungsprodukt von Dichlorhydrin mit dem Polyamidoamin Nr. 6 aus Tabelle 1 ersetzt. Dadurch konnte eine Metallverteilung von 70 % (0,3 mm) bzw. 100 % (0,5 mm) erreicht werden.

### Beispiel 4:

Einem Kupferbad mit der Zusammensetzung
65 g/l Kupfersulfat (CuSO₄·H₂O)
250 g/l Schwefelsäure
0,06 g/l Natriumchlorid
wurde als Badadditiv
1,0 g/l Umsetzungsprodukt von Dichlorhydrin mit dem Polyamidoamin Nr. 5 aus Tabelle 1
zugegeben. Bei einer Elektrolyttemperatur von 22°C wurde bei einer Stromdichte von 2,5 A/dm² ein matter Kupferüberzug gebildet. Auf einer 2 mm dicken Leiterplatte mit Bohrungen mit 0,35 mm Durchmesser konnte eine Metallverteilung von 83 % erhalten werden.

Ohne Zugabe des Umsetzungsproduktes mit dem Polyamidoamin Nr. 5 wurde eine Metallverteilung von lediglich etwa 33 % erreicht. Die Kupferschicht war ungleichmäßig scheckig und matt.

### Beispiele 4 bis 12:

Ähnlich gute Ergebnisse wurden bei Wiederholung der Beispiele 1 bis 4 erhalten, wobei in den einzelnen Versuchen anstelle der Umsetzungsprodukte von Dichlorhydrin mit den Polyamidoaminen Umsetzungsprodukte von 1-Chlor-2,3-propandiol mit den jeweiligen Polyamidoaminen Nr. 3, 5 und 6 und Umsetzungsprodukte von Epichlorhydrin mit den jeweiligen Polyamidoaminen Nr. 3, 5 und 6 eingesetzt wurden.

**Tabelle 1:**

| **Polyamidoamine** | | | | |
|---|---|---|---|---|
| Nr. | Amin | Säure | Zusatz | bevorzugte Konz. [g/l] |
| 1 | Diethylen-triamin | Korksäure | | 0,4 - 0,6 |
| 2 | Tripropylen-tetramin | Adipinsäure | | 0,2 - 0,4 |
| 3 | Tetraethylen-pentamin | Maleinsäure | | 0,1 - 0,2 |
| 4 | Bis-(hexamethylen)-triamin | Bernsteinsäure | 3-Methylaminopropylamin | 0,3 - 0,5 |
| 5 | Dipropylentriamin | Adipinsäure | ε-Caprolactam | 0,2 - 0,4 |
| 6 | Tripropylentetramin | Maleinsäure | γ-Butyrolactam | 0,4 - 0,6 |

**Tabelle 2:**

| **Thioverbindungen** | |
|---|---|
| | bevorzugte Konz. [g/l] |
| 3-Mercaptopropan-1 -sulfonsäure, Natriumsalz | 0,002 - 0,1 |
| Thiophosphorsäure-O-ethyl-bis-(ω-sulfopropyl)-ester, Dinatriumsalz | 0,01 - 0,15 |
| Thiophosphorsäure-tris-(ω-sulfopropyl)-ester, Trinatriumsalz | 0,02 - 0,15 |
| Thioglykolsäure | 0,001 - 0,005 |
| Ethylendithiodipropylsulfonsäure, Natriumsalz | 0,001 - 0,1 |
| Bis-(ω-sulfopropyl)-disulfid, Dinatriumsalz | 0,001 - 0,05 |
| Bis-(ω-sulfopropyl)-sulfid, Dinatriumsalz | 0,01 - 0,15 |
| O-Ethyl-dithiokohlensäure-S-(ω-sulfopropyl)-ester, Kaliumsalz | 0,002 - 0,05 |
| 3-(Benzthiazolyl-2-thio)-propylsulfonsäure, Natriumsalz | 0,005 - 0,1 |
| Bis-(ω-sulfo-2-hydroxypropyl)-disulfid, Dinatriumsalz | 0,003 - 0,04 |
| Bis-(ω-sulfobutyl)-disulfid, Dinatriumsalz | 0,004 - 0,04 |
| Bis-(p-sulfophenyl)-disulfid, Dinatriumsalz | 0,004 - 0,04 |
| Methyl-(ω-sulfopropyl)-disulfid, Dinatriumsalz | 0,007 - 0,08 |
| Methyl-(ω-sulfopropyl)-trisulfid, Dinatriumsalz | 0,005 - 0,03 |

**Tabelle 3:**

| **Stickstoff enthaltende Thioverbindungen** |
|---|
| N -Acetylthioharnstoff |
| N-Trifluoroacetylthioharnstoff |
| N-Ethylthioharnstoff |
| N-Cyanoacetylthioharnstoff |
| N-Allylthioharnstoff |
| o-Tolylthioharnstoff |
| N,N'-Butylenthioharnstoff |
| Thiazolidinthiol-(2) |
| 4-Thiazolinthiol-(2) |
| Imidazolidinthiol-(2)-(N,N'-Ethylenthioharnstoff) |
| 4-Methyl-2-pyrimidinthiol |
| 2-Thiouracil |

**Tabelle 4:**

| **Polymere Phenazoniumverbindungen** |
|---|
| Poly(6-methyl-7-dimethylamino-5-phenyl-phenazoniumsulfat) |
| Poly(2-methyl-7-diethylamino-5-phenyl-phenazoniumchlorid) |
| Poly(2-methyl-7-dimethylamino-5-phenyl-phenazoniumsulfat) |
| Poly(5-methyl-7-dimethylamino-phenazoniumacetat) |
| Poly(2-methyl-7-anilino-5-phenyl-phenazoniumsulfat) |
| Poly(2-methyl-7-dimethylamino-phenazoniumsulfat) |
| Poly(7-methylamino-5-phenyl-phenazoniumacetat) |
| Poly(7-ethylamino-2,5-diphenyl-phenazoniumchlorid) |
| Poly(2,8-dimethyl-7-diethylamino-5-p-tolyl-phenazoniumchlorid) |
| Poly(2,5,8-triphenyl-7-dimethylamino-phenazoniumsulfat) |
| Poly(2,8-dimethyl-7-amino-5-phenyl-phenazoniumsulfat) |
| Poly(7-dimethylamino-5-phenyl-phenazoniumchlorid) |

## Patentansprüche

1. Wäßriges Bad zum elektrolytischen Abscheiden von Kupferschichten, enthaltend mindestens eine Kupferionenquelle, mindestens eine die elektrische Leitfähigkeit des Bades erhöhende Verbindung sowie mindestens einen Zusatzstoff,
**dadurch gekennzeichnet**, daß als Zusatzstoff mindestens ein Umsetzungsprodukt, gebildet aus mindestens einer Verbindung, ausgewählt aus der Gruppe, bestehend aus Epihalogenhydrinen, Dihalogenhydrinen und 1-Halogen-2,3-propandiolen, mit mindestens einem Polyamidoamin, enthalten ist.

2. Bad nach Anspruch 1, gekennzeichnet durch Epihalogenhydrine, ausgewählt aus der Gruppe, bestehend aus 1-Chlor-2,3-epoxypropanol und 1-Brom-2,3-epoxypropanol.

3. Bad nach einem der vorstehenden Ansprüche, gekennzeichnet durch Dihalogenhydrine, ausgewählt aus der Gruppe, bestehend aus 1,3-Dichlor-2-propanol und 1,3-Dibrom-2-propanol.

4. Bad nach einem der vorstehenden Ansprüche, gekennzeichnet durch 1-Halogen-2,3-propandiole, ausgewählt aus der Gruppe, bestehend aus 1-Chlor-2,3-propandiol und 1-Brom-2,3-propandiol.

5. Bad nach einem der vorstehenden Ansprüche, gekennzeichnet durch Polyamidoamine, hergestellt als Reaktionsprodukt von mindestens einer Dicarbonsäure mit mindestens einem Polyalkylenpolyamin.

6. Bad nach Anspruch 5, gekennzeichnet durch Polyalkylenpolyamine mit 3 bis 10 Aminogruppen.

7. Bad nach einem der Ansprüche 5 und 6, gekennzeichnet durch Polyalkylenpolyamine, ausgewählt aus der Gruppe, bestehend aus Diethylentriamin, Triethylentetramin, Tetraethylenpentamin, Dipropylentriamin, Tripropylentetramin, Bis-(hexamethylen)-triamin, Hexamethylentriamin und Bis-(aminopropyl)-piperazin.

8. Bad nach einem der Ansprüche 5 bis 7, gekennzeichnet durch Dicarbonsäuren, ausgewählt aus der Gruppe, bestehend aus Bernsteinsäure, Maleinsäure, Fumarsäure, Adipinsäure, Glutarsäure, Korksäure, Sebacinsäure, Phthalsäure und Terephthalsäure.

9. Bad nach einem der Ansprüche 5 bis 8, gekennzeichnet durch Polyamidoamine, hergestellt als Reaktionsprodukt von mindestens einer Dicarbonsäure, mindestens einem Polyalkylenpolyamin und mindestens einem Diamin.

10. Bad nach Anspruch 8, dadurch gekennzeichnet, daß die Diamine in einer Konzentration von höchstens 10 Gew.-%, bezogen auf die Menge der Polyalkylenpolyamine, verwendet werden.

11. Bad nach einem der Ansprüche 5 bis 10, dadurch gekennzeichnet, daß die Reaktionsprodukte in Gegenwart von mindestens einem Lacton und/oder mindestens einem Lactam gebildet sind.

12. Bad nach einem der vorstehenden Ansprüche, dadurch gekennzeichnet, daß die Zusatzstoffe durch Umsetzung von 0,2 bis 3 Mol der Verbindungen, ausgewählt aus der Gruppe, bestehend aus Epihalogenhydrinen, Dihalogenhydrinen und 1-Halogen-2,3-propandiolen, pro 1 Mol Polyamidoamine gebildet sind.

13. Bad nach einem der vorstehenden Ansprüche, dadurch gekennzeichnet, daß die Zusatzstoffe in einer Konzentration von 0,005 bis 50 g/l Bad enthalten sind.

14. Bad nach einem der vorstehenden Ansprüche, dadurch gekennzeichnet, daß zusätzlich mindestens eine Thioverbindung enthalten ist.

15. Bad nach einem der vorstehenden Ansprüche, dadurch gekennzeichnet, daß zusätzlich mindestens eine stickstoffhaltige Thioverbindung enthalten ist.

16. Bad nach einem der vorstehenden Ansprüche, dadurch gekennzeichnet, daß zusätzlich mindestens eine polymere Phenazoniumverbindung enthalten ist.

17. Verfahren zum elektrolytischen Abscheiden von gleichmäßig dicken Kupferschichten auf einem Werkstück mit folgenden Verfahrensschritten:
a) Bereitstellen eines wäßrigen Kupferabscheidebades, einer Elektrode und einer Spannungsquelle,
b) In-Kontakt-Bringen des Werkstückes und der Elektrode mit dem Bad,
c) Elektrisches Verbinden der Elektrode und des Werkstückes mit der Spannungsquelle, so daß die Elektrode als Anode und das Werkstück als Kathode polarisiert werden,
**dadurch gekennzeichnet**, daß als Kupferabscheidebad das Bad nach einem der Ansprüche 1 bis 16 verwendet wird.

## Claims

1. Aqueous bath for electrolytically depositing copper layers, containing at least one copper ion source, at least one compound which increases the electrical conductance of the bath, and at least one additive, characterised in that at least one reaction product, formed from at least one compound selected from the group consisting of epihalogen hydrines, dihalogen hydrines and 1-halogen-2,3-propandiols, with at least one polyamidoamine, is contained as the additive.

2. Bath according to claim 1, characterised by epihalogen hydrines, selected from the group consisting of 1-chloro-2,3-epoxypropanol and 1-bromo-2,3-epoxypropanol.

3. Bath according to one of the preceding claims, characterised by dihalogen hydrines selected from the group consisting of 1,3-dichloro-2-propanol and 1,3-dibromo-2-propandiol.

4. Bath according to one of the preceding claims, characterised by 1-halogen-2,3-propandiols selected from the group consisting of 1-chloro-2,3-propandiol and 1-bromo-2,3-propandiol.

5. Bath according to one of the preceding claims, characterised by polyamidoamines produced as the reaction product of at least one dicarboxylic acid with at least one polyalkylene polyamine.

6. Bath according to claim 5, characterised by polyalkylene polyamines having 3 to 10 amino groups.

7. Bath according to one of claims 5 and 6, characterised by polyalkylene polyamines selected from the group consisting of diethylene triamine, triethylene tetramine, tetraethylene pentamine, dipropylene triamine, tripropylene tetramine, bis-(hexamethylene)-triamine, hexamethylene triamine and bis-(aminopropyl)-piperazine.

8. Bath according to one of claims 5 to 7, characterised by dicarboxylic acids selected from the group consisting of succinic acid, maleic acid, fumaric acid, adipic acid, glutaric acid, suberic acid, sebacic acid, phthalic acid and terephthalic acid.

9. Bath according to one of claims 5 to 8, characterised by polyamidoamines produced as the reaction product of at least one dicarboxylic acid, at least one polyalkylene polyamine and at least one diamine.

10. Bath according to claim 8, characterised in that the diamines are used in a concentration of, at most, 10 % by wt. relative to the quantity of the polyalkylene polyamines.

11. Bath according to one of claims 5 to 10, characterised in that the reaction products are formed in the presence of at least one lactone and/or at least one lactam.

12. Bath according to one of the preceding claims, characterised in that the additives are formed by reacting 0.2 to 3 mol of the compounds, selected from the group consisting of epihalogen hydrines, dihalogen hydrines and 1-halogen-2,3-propandiols, per 1 mol polyamidoamines.

13. Bath according to one of the preceding claims, characterised in that the additives are contained in a concentration of 0.005 to 50 g/l bath.

14. Bath according to one of the preceding claims, characterised in that at least one thio compound is additionally contained.

15. Bath according to one of the preceding claims, characterised in that at least one nitrogenous thio compound is additionally contained.

16. Bath according to one of the preceding claims, characterised in that at least one polymeric phenazonium compound is additionally contained.

17. Method of electrolytically depositing uniformly thick copper layers on a workpiece, having the following method steps:
a) preparing an aqueous copper deposition bath, an electrode and a voltage source,
b) bringing the workpiece and the electrode in contact with the bath, and
c) electrically connecting the electrode and the workpiece to the voltage source, so that the electrode is polarised as the anode and the workpiece is polarised as the cathode,
characterised in that the bath according to one of claims 1 to 16 is used as the copper deposition bath.

## Revendications

1. Bain aqueux pour déposer par voie électrolytique des couches de cuivre contenant au moins une source d'ions cuivre, au moins un composé augmentant la conductivité électrique du bain et au moins un additif, caractérisé en ce qu'il contient au moins un produit de transformation, formé à partir d'un composé, choisi parmi le groupe constitué par les épihalogènehydrines, dialogènehydrines et les 1-halogéno-propane-2,3-diols, avec au moins une polyamidoamine.

2. Bain selon la revendication 1, caractérisé par les épihalogènehydrines, choisies parmi le groupe constitué par le 1-chloro-2,3-époxypropanol et le 1-bromo-2,3-époxypropanol.

3. Bain selon l'une des revendications précédentes, caractérisé par les dihalogènehydrines, choisies parmi le groupe constitué par le 1,3-dichloro-2-propanol et le 1,3-dibromo-2-propanol.

4. Bain selon l'une quelconque des revendications précédentes, caractérisé par les 1-halogéno-propane-2,3-diols, choisi parmi le groupe constitué par les 1-chloro-propane-2,3-diols et les 1-bromo-propane-2,3-diols.

5. Bain selon l'une quelconque des revendications précédentes, caractérisé par les polyamidoamines, fabriquées comme produit réactionnel d'au moins un acide dicarboxylique avec une polyalkylènepolyamine.

6. Bain selon la revendication 5, caractérisé par les polyalkylènepolyamines dotées de 3 à 10 groupes amine.

7. Bain selon l'une quelconque des revendications 5 et 6, caractérisé par les polyalkylènepolyamines, choisies parmi le groupe constitué par la diéthylènetriamine, la diéthylènetétramine, la tétraéthylènepentamine, la dipropylènetriamine, la tripropylènetétramine, la bis-(hexaméthylène)-triamine, l'héxaméthylènetriamine et la bis-(aminopropyl)-pipérazine.

8. Bain selon l'une quelconque des revendications 5 à 7, caractérisé par les acides dicarboxyliques, choisis parmi le groupe constitué par l'acide succinique, l'acide maléique, l'acide fumarique, l'acide adipique, l'acide glutarique, l'acide subérique, l'acide sébacique, l'acide phtalique et l'acide téréphtalique.

9. Bain selon l'une quelconque des revendications 5 à 8, caractérisé par les polyamidoamines fabriquées comme produit réactionnel d'un moins un acide dicarboxylique, au moins une polyalkylènepolyamine et au moins une diamine.

10. Bain selon la revendication 8, caractérisé en ce que les diamines sont utilisées à une concentration d'au maximum 10 % en masse rapportée sur la quantité de polyalkylènepolyamines.

11. Bain selon l'une quelconque des revendications 5 à 10, caractérisé en ce que les produits réactionnels ont été formés en présence d'au moins un lactone et/ou au moins un lactame.

12. Bain selon l'une quelconque des revendications précédentes, caractérisé en ce que les additifs sont formés par transformation de 0,2 à 3 moles des composés choisis parmi le groupe constitué par les épihalogènehydrines, dihalogènehydrines et 1-Halogèno-propane-2,3-diols, pour 1 mole de polyamidomamine.

13. Bain selon l'une quelconque des revendications précédentes, caractérisé en ce qu'il contient les additifs dans une concentration de 0,005 à 50g/l de bain.

14. Bain selon l'une quelconque des revendications précédentes, caractérisé en ce qu'il contient au moins un composé thio en plus.

15. Bain selon l'une quelconque des revendications précédentes, caractérisé en ce qu'il contient au moins un composé thio azoté en plus.

16. Bain selon l'une quelconque des revendications précédentes, caractérisé en ce qu'il contient au moins un composé phénazonium polymère en plus.

17. Procédé pour déposer par voie électrolytique des couches de cuivre de même épaisseur sur un outil par le biais des étapes suivantes
a) préparer un bain aqueux pour le dépôt de cuivre, une électrode et une source de tension électrique,
b) mettre en contact l'outil et l'électrode avec le bain,
c) relier électriquement l'électrode et l'outil à une source de tension électrique pour que l'électrode soit polarisée à titre d'anode et l'outil à titre de cathode,
caractérisé en ce que le bain selon l'une des revendications 1 à 16 est utilisé comme bain pour le dépôt de cuivre.
